(19) Europäisches Patentamt
European Patent Office
Office européen des brevets

(11) Veröffentlichungsnummer : **0 034 326**
**B1**

(12) # EUROPÄISCHE PATENTSCHRIFT

(45) Veröffentlichungstag der Patentschrift : **25.07.84**

(51) Int. Cl.³ : **C 08 G 77/38**, C 07 B 19/00, B 01 J 20/26, G 01 N 31/08

(21) Anmeldenummer : **81100926.5**

(22) Anmeldetag : **10.02.81**

(54) **Chirale Polysiloxane, Verfahren zu deren Herstellung und deren Verwendung.**

(30) Priorität : **11.02.80 DE 3005024**

(43) Veröffentlichungstag der Anmeldung : **26.08.81 Patentblatt 81/34**

(45) Bekanntmachung des Hinweises auf die Patenterteilung : **25.07.84 Patentblatt 84/30**

(84) Benannte Vertragsstaaten :
**BE CH DE FR GB IT LI NL SE**

(56) *Entgegenhaltungen :*
**DE-A- 2 740 019**
**ANGEWANDTE CHEMIE, Band 90 Nr. 5, 1978 Weinheim H. FRANK et al. "Chirale Polysiloxane zur Trennung von optischen Antipoden" Seiten 396 bis 398**

(73) Patentinhaber : **Bayer, Ernst, Prof. Dr.**
**Bei der Ochsenweide 17**
**D-7400 Tübingen 1 (DE)**

(72) Erfinder : **Bayer, Ernst, Prof. Dr.**
**Bei der Ochsenweide 17**
**D-7400 Tübingen 1 (DE)**
Erfinder : **Hartmut, Frank, Dr.**
**Panoramastrasse 30**
**D-7406 Mössingen 5 (DE)**

(74) Vertreter : **Kinzebach, Werner, Dr. Patentanwälte et al**
**Reitstötter J. Prof.Dr.Dr. Kinzebach W. Dr. & Partner**
**Bauerstrasse 22 Postfach 780**
**D-8000 München 43 (DE)**

**EP 0 034 326 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft chirale Polysiloxane, ein Verfahren zu deren Herstellung und deren Verwendung.

Polysiloxane mit kovalent gebundenen, chiralen Resten haben in letzer Zeit Bedeutung in der gaschromatographischen Trennung von Aminosäure-Enantiomeren und in der quantitativen Analyse durch « Enantiomer-Labelling » erlangt. Insbesondere für die Bestimmung von Aminosäuren in Körperflüssigkeiten wie Serum oder Urin oder in Wasser unterschiedlicher Herkunft wurde durch Trennung an Kapillaren mit Polysiloxanen eine bisher nicht erreichte Analysengeschwindigkeit und Genauigkeit erzielt. Chirale Organosiloxane als stationäre Phasen zur chromatographischen Trennung optischer Antipoden sind in der DE-OS 27 40 019 beschrieben.

Nachteilig am Stand der Technik ist, daß die Bestimmung mancher Aminosäuren dadurch erschwert wird, daß zwei Aminosäureenantiomere zusammen eluieren und die Quantisierung sämtlicher Aminosäuren dann in zwei Analysengängen erfolgen muß, beispielsweise nach alternativer Derivatisierung.

Gegenstand der Erfindung sind neue Polysiloxane der allgemeinen Formel I :

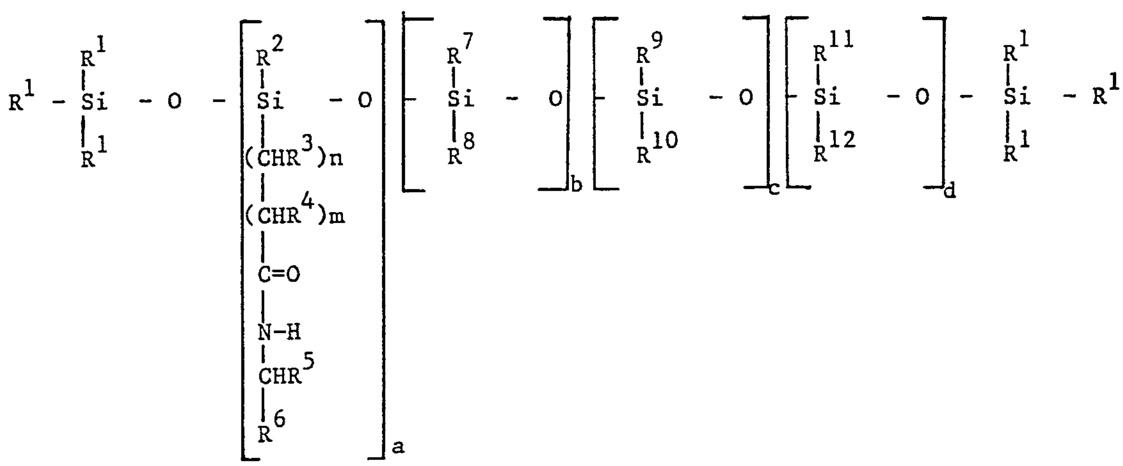

(I)

worin

$R^1$ und $R^2$ für Alkyl stehen,

$R^3$ und $R^4$ für H und Alkyl stehen,

$R^5$ die Bedeutungen Alkyl, Imidazolylmethyl, Indolylmethyl, Benzyl, Acylaminopropyl, Acylaminobutyl, besitzt, oder wenn $R^6$ für Aryl steht, die Bedeutung Alkyl besitzt,

$R^6$ für Alkylaminocarbonyl, Cycloalkylaminocarbonyl, Aralkylaminocarbonyl, Arylaminocarbonyl oder Bicycloalkylaminocarbonyl, oder für Aryl, steht,

$R^7$, $R^8$, $R^9$, $R^{10}$ und $R^{11}$ für Alkyl oder Aryl stehen,

$R^{12}$ die Bedeutungen Alkylaminocarbonylalkyl, Cyanoalkyl, Carboxyalkyl, Alkoxycarbonylalkyl, Arylaminocarbonylalkyl, Halogenalkyl, Halogenaryl, Nitroaryl, Vinyl, besitzt,

m und n zwischen 0 und 12 variieren kann,

a zwischen 5 und 20 variieren kann,

d mindestens 1 bedeutet,

wobei a + b + c + d zwischen 30 und 100 variieren.

Nach einer bevorzugten Ausführungsform werden neuen Polysiloxane der allgemeinen Formel I geschaffen, worin :

$R^1$ und $R^2$ jeweils Methyl bedeuten,

$R^3$ und $R^4$ für H, Methyl oder Äthyl stehen,

$R^5$ die Bedeutungen Methyl, i-Propyl, i-Butyl, 2-Butyl, Imidazolylmethyl, Indolylmethyl, Benzyl, Acylaminopropyl, Acylaminobutyl besitzt, oder wenn $R^6$ für Phenyl oder Naphthyl steht, die Bedeutung Methyl besitzt,

$R^6$ die Bedeutungen n-Butylaminocarbonyl, i-Butylaminocarbonyl, ter.-Butylaminocarbonyl, Cyclohexylaminocarbonyl, Adamantylaminocarbonyl, Benzylaminocarbonyl, oder Phenyl oder Naphthyl besitzt,

$R^7$, $R^8$, $R^9$, $R^{10}$ und $R^{11}$ für $C_1$-$C_4$-Alkyl, insbesondere Methyl oder Phenyl stehen,

$R^{12}$ für n-Butylaminocarbonylpropyl, n-Propylaminocarbonylbutyl, Phenylaminocarbonyl, Trifluorpropyl, Cyanopropyl, Trichlorphenyl, Methoxycarbonylpropyl, Carboxypropyl steht,

und worin a insbesondere für 8 steht.

Erfindungsgemäß wird auch ein Verfahren zur Herstellung der Polysiloxane der allgemeinen Formel I geschaffen, das dadurch gekennzeichnet ist, daß man eine Verbindung der allgemeinen Formel II :

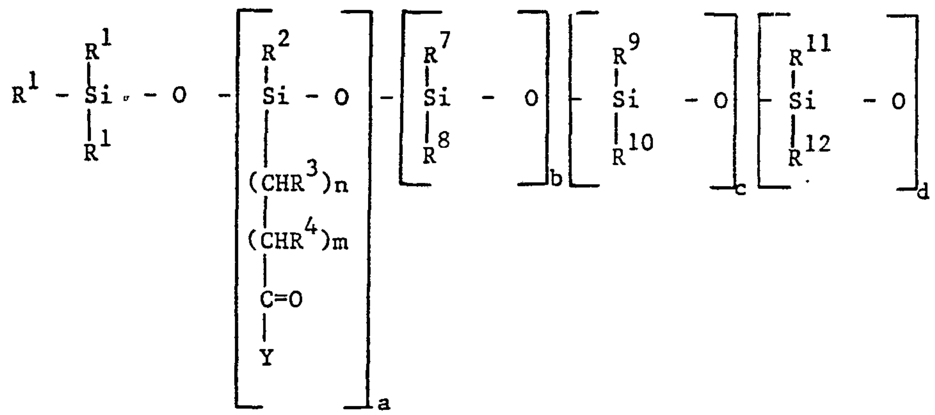

(II)

worin die Reste $R^1$, $R^2$, $R^3$, $R^4$, $R^7$, $R^8$, $R^9$, $R^{10}$, $R^{11}$ und $R^{12}$, sowie die Indices m, n, a, b, c, und d die vorstehend angegebenen Bedeutungen besitzen und worin der Rest Y zusammen mit der C=O-Gruppe, an welche er gebunden ist, für eine Carboxylgruppe oder ein aktiviertes Derivat einer Carboxylgruppe steht, insbesondere die folgenden Bedeutungen besitzt :

$—N_3$, —OR, —OCOR, O-Nitrophenyl, —O-Trihalogenphenyl, —O-Pentahalogenphenyl,

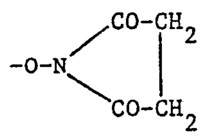

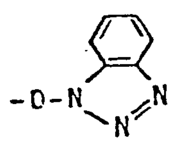

worin R für einen gegebenenfalls substituierten Alkylrest, Aralkylrest oder Arylrest steht, mit einem primären Amin der nachstehenden allgemeinen Formel III :

$$H_2N—CHR^5R^6 \quad \text{(III)}$$

worin $R^5$ und $R^6$ die vorhergehend angegebenen Bedeutungen besitzen,
gegenbenenfalls in Gegenwart eines Kupplungsreagens, insbesondere in Gegenwart von Dicyclohexylcarbodiimid oder Carbonyldiimidazol, oder nach Umsetzung zum Säurechlorid, Säureanhydrid oder aktivierten Ester, umsetzt.

Die Erfindung betrifft auch die Verwendung der chiralen Polysiloxane der allgemeinen Formel I bei der Trennung von optischen Antipoden, insbesondere unter Anwendung der Chromatographie, beispielsweise der Gaschromatographie in gepackten Säulen oder Kapillaren. Die erfindungsgemäße Verwendung betrifft insbesondere analytische und präparative Trennungen.

Die erfindungsgemäßen Verbindungen haben den besonderen Vorteil, daß durch sorgfältige Abstimmung von Enantioselektivität und Polarität des Polysiloxanes der allgemeinen Formel I die Überlagerungen zweier Aminosäuren nach dem Stand der Technik eliminiert werden.

Bei den bekannten chiralen Phasen sind Enantioselektivität und Polarität der stationären Phase durch die Verhältnisse von achiralem und chiralem Molekülteil festgelegt und nicht unabhängig beeinflußbar. Kapillaren, die mit solchen stationären Phasen belegt sind, zeigen zwar eine hervorragende Enantioselektivität, doch ist die vollständige Trennung mancher, aus bestimmten Gründen bevorzugter Derivate nicht für alle Aminosäuren erreichbar.

Bei Verwendung der erfindungsgemäßen chiralen Polysiloxane wird das genannte Problem für alle N-Acylaminosäurealkylester mit beliebiger Kombination von N-Acyl- und Alkylester-Gruppierung gelöst. Die Polarität dieser chiralen Polysiloxane und die relative und absolute Retentionszeit der verschiedenen Aminosäuren kann dadurch in weitem Bereich variiert werden, daß Poly(carboxyalkyl-alkyl(aryl)-siloxan) und Poly(dialkylsiloxan) mit variierenden Mengen einer oder mehrerer weiterer, stärker polarer Polysiloxane wie Poly(aryl-alkyl-siloxan), Poly(diaryl-siloxan), Poly(di(halogenaryl, nitroaryl)siloxan, Poly(alkyl-(aryl)-cyanoalkyl-siloxan) oder Poly(alkyl(aryl)-amino-carboalkyl-siloxan) als Modifikatoren äquilibriert werden oder man mischt die Modifikatoren in den gewünschten Verhältnissen mit einer vorgegebenen chiralen Silikonphase. Im Gegensatz zu den genannten polaren « Modifikatoren » eignen sich Siloxane mit Carboxylgruppen oder Estergruppen weniger gut, da sie ungenügende thermische Stabilität haben.

Die bei der Definition der Reste der Verbindungen der allgemeinen Formel I bis III verwendeten, nachstehenden Begriffe haben insbesondere die folgenden Bedeutungen :

Der Begriff « Alkyl » umfaßt insbesondere Alkylreste mit 1 bis 20 Kohlenstoffatomen, vorzugsweise Alkylreste mit 1 bis 4 Kohlenstoffatomen, beispielsweise Methyl, Äthyl, n-Propyl, i-Propyl, n-Butyl, i-Butyl, 2-Butyl, tert.-Butyl. Diese Definitionen gelten auch für « Alkyl » in Resten, die eine Alkylgruppe als Substituent enthalten, beispielsweise Alkoxy, Aklylaminocarbonyl, Carboxyalkyl usw.

Der Begriff « Aryl » steht für aromatische Kohlenwasserstoffreste, insbesondere für Phenyl und Naphthyl.

Der Begriff « Aralkyl » umfaßt die wie zuvor definierten Arylreste, welche durch Alkylreste substituiert sind. Die Alkylreste sind hierbei wie zuvor definiert.

« Cycloalkyl » steht insbesondere für $C_3$ bis $C_8$-Ringe. Bicyclische Alkylreste können insbesondere 7 bis 9 Ringkohlenstoffatome umfassen.

Der Begriff « Halogen » umfaßt Fluor, Chlor, Brom und Jod.

In den Figuren 1a bis 2b sind Beispiele für chromatographische Trennungen von enantiomeren Aminosäuregemischen unter Verwendung der erfindungsgemäßen chiralen Polysiloxane und unter Verwendung von Polysiloxanen des Standes der Technik (DE-OS 27 40 019) dargestellt. Figur 3 stellt ein weiteres Beispiel für eine Trennung eines hydrolysierten Decapeptides unter Verwendung eines erfindungsgemäßen Polysiloxans dar. Figur 4 ist ein Blockbild einer Apparatur zur quantitativen Analyse von Aminosäuren und anderen optisch aktiven Substanzen.

In den Figuren 1a und 1b sind Chromatogramme von Aminosäure-enantiomerengemischen dargestellt, die einmal unter Verwendung eines bekannten Polysiloxans (Figur 1a) und zum anderen unter Verwendung eines erfindungsgemäßen Polysiloxans (Figur 1b) erhalten wurden. Ein Vergleich dieser Figuren ergibt folgenden Befund :

Während mit einer Glaskapillare, belegt mit einem herkömmlichen Copolysiloxan aus Untereinheiten mit chiraler Gruppe und Dimethylsiloxan-Untereinheiten L-Valin und Glycin sowie L-Phenylalanin und Glutaminsäure zusammen eluieren, kann mit einer Kapillare, belegt mit einem durch eine dritte Siloxankomponente modifizierten Copolysiloxan, die vollständige Trennung aller Aminosäureenantiomeren erreicht werden. Auch die nur schlechte Trennung von L-Asparaginsäure und L-Cystein ist wesentlich besser. Als Derivate wurden die N (O,S)-Pentafluoropropionylaminosäure-isopropylester verwendet.

Die Trifluoracetylaminosäure-n-propylester werden in der Gaschromatographie aus verschiedenen Gründen oft bevorzugt. Die Enantiomeren-Gemische aller natürlichen Aminosäuren sind aber an den herkömmlichen chiralen Copolysiloxanen aus den bekannten (DOS 27 40 019, Formel III) zwei Monomeren nicht vollständig trennbar (Figur 2a), weswegen bisher ausschließlich die Pentafluoropropionylaminosäure-isopropylester für die gaschromatographische Analyse aller Aminosäureenantiomeren benutzt wurden. Mit Kapillaren belegt mit einem Copolymer, welches mit empirisch bestimmten Mengen zweier zusätzlicher Monomereinheiten modifiziert ist, wird jedoch eine vollständige Auflösung aller N(O,S)-Trifluoracetylaminosäure-n-propylester erreicht. Während an den herkömmlichen Copolysiloxanen L-Serin und D-Prolin überlappen und D-Threonin, Glycin und L-Valin nur unvollständig getrennt werden, ist beim modifizierten chiralen Polysiloxan die vollständige Trennung sämtlicher Enantiomeren erreicht (Figur 2b).

Die so modifizierten polymeren, chiralen Siloxane sind von gleicher oder höherer Stabilität als die herkömmlichen Polysiloxane, zeichnen sich aber dadurch aus, daß nun gemäß dem zu erwartenden Trennproblem und der verwendeten Derivate eine spezielle, sozusagen maßgeschneiderte Trennphase für die Gaschromatographie zur Verfügung steht.

In der Figur 3 ist ein Chromatogramm dargestellt, das bei einer quantitativen Analyse eines Decapeptides erhalten wurde. Die Arbeitsweise ist folgendermaßen :

Zur der Probe eines in üblicher Weise hydrolysierten Decapeptides wird eine Lösung bekannter Konzentrationen der unnatürlichen D-Aminosäuren als interne Standards zugesetzt. Nach der üblichen Umsetzung zu den N-Pentafluoropropionyl-aminosäure-isopropylestern wird ein Aliquot der Probe in der Apparatur nach der Erfindung chromatographiert. Die Bestimmung der unbekannten Mengen der einzelnen L-Aminosäuren erfolgt durch Berechnung des Verhältnisses der Peak-Flächen der L- und D-Enantiomeren einer Aminosäure, multipliziert mit der als Standard zugesetzten Menge an D-Enantiomeren. Die Flächenbestimmung erfolgt mit den üblichen planimetrischen Methoden oder elektronisch.

Aus dem in Figur 1 dargestellten, mit der nachstehend beschriebenen Apparatur erzielten Chromatogramm ergab sich für das untersuchte Decapeptid folgende Zusammensetzung :

| | Zugesetzte Menge an D-Enantiomer (nMol) | Verhältnis der Peakflächen von L zu D | Berechnete Menge an L-Enantiomer (nMol) |
|---|---|---|---|
| Alanin | 162,5 | 0,4135 | 67,2 |
| Threonin | 122,5 | 0,4948 | 60,6 |
| Glycin | -- | -- | 74,2 |
| Prolin | 127,5 | 0,5586 | 71,2 |
| Phenylalanin | 96,1 | 1,342 | 128,9 |
| Glutaminsäure | 89,4 | 0,706 | 63,1 |
| Tyrosin | 79,0 | 0,761 | 60,7 |
| Lysin | 75,5 | 0,890 | 67,2 |

Hierbei ist der nur geringe Anteil an enantiomeren Verunreinigungen in den D-Standards als auch in den natürlichen L-Aminosäuren nicht berücksichtigt, was aber, falls notwending, durch Einführung von Korrekturfaktoren erfolgen kann.

Die in der Figur 4 dargestellte Apparatur zur gaschromatographischen Analyse von Aminosäuren und anderen enantiomeren Verbindungen ist ein Beispiel für die Verwendung der erfindungsgemäßen Verbindungen. Die Apparatur besteht aus einem Dosiersystem, einer Trennkapillare mit einer lichten Weite von 0,1 bis 0,8 mm und mindestens 5 m Länge, belegt mit einer erfindungsgemäßen chiralen Phase in einem im Bereich zwischen 20 und 300 °C thermostatisierbaren Ofen, einem in der Gaschromatographie üblichen Detektorsystem und einem Schreiber mit oder ohne vorgeschaltetem elektronischem Auswertegerät. Die Apparatur ermöglicht eine routinemäßige, automatisierte quantitative Analyse von Aminosäuren im Bereich von weniger als 100 pico-Mol bei großer Genauigkeit.

Die allgemeine Arbeitsweise wird nachfolgend am Beispiel der quantitativen Analyse von natürlichen L-Aminosäuren erläutert.

Vor der Aufarbeitung, Derivatisierung und Analyse werden der Probe die unnatürlichen Enantiomeren der Aminosäuren als interne Standards völlig gleicher chemischer Eigenschaften zugesetzt. Diese dienen nach der Trennung in der Apparatur als Bezugssubstanzen. Auch für die quantitativen Bestimmungen optisch aktiver Substanzen mit beliebigem, aber bekanntem oder bestimmbarem Verhältnis der Antipoden ist diese Arbeitsweise anwendbar.

Die Erfindung wird durch die nachfolgenden Beispiele näher erläutert.

## Beispiel 1

Darstellung eines Copolysiloxans aus Untereinheiten von N-(4-Methylsiloxyl-butyryl)-L-valin-tert.-butylamid, Dimethylsiloxan und n-Butylaminocarbonylpropyl-methylsiloxan (Figuren 1a/1b, a = 6, b = 42, c = 0, d = 1):

a) 540 mg Poly(carboxypropyl-methylsiloxan) werden in 4 ml Dimethylformamid gelöst und mit 660 mg Carbonyldiimidazol versetzt. Nach einer Stunde Rühren bei Zimmertemperatur gibt man zu dieser Mischung 325 mg n-Butylamin. Nach Rühren über Nacht wird das Lösungsmittel am Rotationsverdampfer abgedampft. Der Rückstand wird in 2 ml n-Butanol aufgenommen und durch Gelpermeationschromatographie an LH 20 mit n-Butanol als Laufmittel gereinigt. Das Lösungsmittel wird im Hochvakuum bei 150 °C entfernt.

b) 1,46 g Poly(carboxypropyl-methylsiloxan) werden mit 0,1 ml konzentrierter Schwefelsäure, 0,27 g Hexamethyldisiloxan und 0,266 g Poly(n-butylaminocarbonylpropyl-methylsiloxan) gemischt und mit 7,74 g Dimethyldichlorsilan versetzt. Diese Mischung erhitzt man unter Rühren auf 60 °C. Darauf gibt man im Verlauf von etwa 30 Minuten langsam 1,1 g Wasser zu. Nach Beendigung der Wasserzugabe wird das Reaktionsgemisch noch 2 Stunden bei 110° bis 120 °C gerührt, um die Äquilibrierungsreaktion zu vollenden. Das Reaktionsgemisch wird abgekühlt, in Äther oder Methylenchlorid aufgenommen und mit Wasser chloridfrei gewaschen. Das Lösungsmittel wird anschließend im Vakuum abgezogen, zum Schluß bei 12 Torr/100 °C. Es resultiert ein klares, bei Zimmertemperatur zähflüssiges Harz.

Bemerkung: 0,266 g Poly(n-butylaminocarbonylpropyl-methylsiloxan) entsprechen 4,5 % (Gewicht) von 1,46 g Poly(carboxypropyl-methylsiloxan) und 4,44 g Poly(dimethylsiloxan).

c) 350 mg Copolymer aus b) werden in 3 ml Methylenchlorid gelöst und mit 110 mg Carbonyldiimidazol versetzt. Nach einer Stunde Rühren bei Zimmertemperatur werden 200 mg L-Valin-tert.-butylamid-hydrochlorid zugesetzt und das Gemisch 20 Stunden bei Zimmertemperatur gerührt. Die organische Phase wird zweimal mit 2 N Essigsäure gewaschen. Dann entfernt man das Lösungsmittel am Rotationsverdampfer. Der Rückstand wird in 2 ml n-Butanol aufgenommen und wie bei a) durch Gelpermeationschromatographie gereinigt. Eine 0,15 %-ige Lösung dieser stationären Phase wird zur Belegung der Glaskapillare verwendet.

## Beispiel 2

Darstellung eines Copolysilixans aus Untereinheiten von N-(4-Methylsiloxylbutyryl)-L-valin-tert.-butylamid, Dimethylsiloxan und Diphenylsiloxan und Zumischung von 3 % Poly(n-butylaminocarbonylpropyl-methylsiloxan) (Figuren 2a/2b, a = 6, b = 36, c = 6):

a) 1,46 g Poly(carboxypropyl-methylsiloxan) werden mit 0,1 ml konzentrierter Schwefelsäure und 0,27 g Hexamethyldisiloxan gemischt und anschließend mit 7,68 g Dimethyldichlorsilan und 2,66 g Diphenyldichlorsilan versetzt. Diese Mischung erhitzt man unter Rühren auf etwa 60 °C. Darauf gibt man im Verlauf von etwa 30 Minuten langsam 1,26 g Wasser zu. Nach zweistündigem Erhitzen auf 110° bis 120 °C erfolgt die Aufarbeitung entsprechend b). Es resultiert ein schwach trübes, bei Zimmertemperatur zähflüssiges Harz.

b) Das Copolymer aus a) wird in der in Beispiel 1, Punkt c) angegebenen Weise mit der chiralen Komponente gekuppelt und gereinigt.

c) 10 mg chirales Polysiloxan aus b) und 0,3 g Modifikator nach Beispiel 1, Punkt a) werden 9n 6,86 g Methylenchlorid gelöst und so zu Belegung der Glaskapillare verwendet.

Beispiel 3

Darstellung eines Copolysiloxans aus Untereinheiten von N-(4-Methylsiloxyl-isobutyryl)-l-valin-tert.-butylamid, Dimethylsiloxan und n-Butylaminocarbonylpropyl-methylsiloxan (a = 6, b = 42, c = 0, d = 1) :

a) 1,46 g Poly(carboxyisopropyl-methylsiloxan) werden mit 0,1 ml konzentrierter Schwefelsäure, 0,27 g Hexamethyldisiloxan gemischt und mit 7,74 g Dimethyldichlorsilan versetzt. Diese Mischung erhitzt man unter Rühren auf etwa 60 °C. Darauf gibt man im Verlauf von etwa 30 Minuten langsam 1,1 g Wasser zu. Nach zweistündigem Erhitzen auf 110° bis 120 °C erfolgt die Aufarbeitung entsprechend Beispiel 1, Punkt b). Es resultiert ein klares, bei Zimmertemperatur zähflüssiges Harz.

b) 350 mg Copolymer aus a) werden in 3 ml Methylenchlorid gelöst und mit 13 mg Carbonyldiimidazol versetzt. Nach 30 Minuten bei Zimmertemperatur werden 6 mg n-Butylamin zugesetzt und das Gemisch 3 Stunden gerührt. Nun werden weitere 100 mg Carbonyldiimidazol zugegeben und eine Stunde gerührt. Nach Addition von 200 mg L-Valin-tert.-butylamidhydrochlorid wird das Gemisch 20 Stunden bei Zimmertemperatur gerührt. Die Aufarbeitung des Ansatzes erfolgt wie im Beispiel 1, Punkt c) durch Waschen mit Essigsäure und Gelpermeationschromatographie.

Beispiel 4

Quantitative Bestimmung der Konzentration von freien Aminosäuren im Blutserum :

0,5 ml Blut werden mit genau bekannter Menge von 40 bis 100 nMol der D-Enantiomeren versetzt und die Aminosäuren in geeigneter Weise isoliert, derivatisiert und ein Aliquot in der zuvor beschriebenen Apparatur chromatographiert. Die quantitative Berechnung erfolgt planimetrisch oder elektronisch.

Beispiel 5

Quantitative Bestimmung von L-3'-Methoxy-4'-hydroxy-phenylglykol (MHPG) in einer Urinprobe :

Zu einer Urinprobe werden eine genau bekannte Menge D-3'-Methoxy-4'-hydroxy-phenylglykol (MHPG) als interner Standard zugesetzt. Nach entsprechender Isolierung und Derivatisierung mit Pentafluorpropionsäureanhydrid wird ein Aliquot der Lösung in der zuvor beschriebenen Apparatur chromatographiert. Die quantitative Berechnung der Menge des in der Probe vorhandenen natürlichen L-MHPG erfolgt planimetrisch oder elektronisch.

In den vorstehenden Beispielen 4 und 5 wurde das nach Beispiel 1 dargestellte Polysiloxan eingesetzt.

**Ansprüche**

1. Chirale Polysiloxane der nachstehenden allgemeinen Formel I :

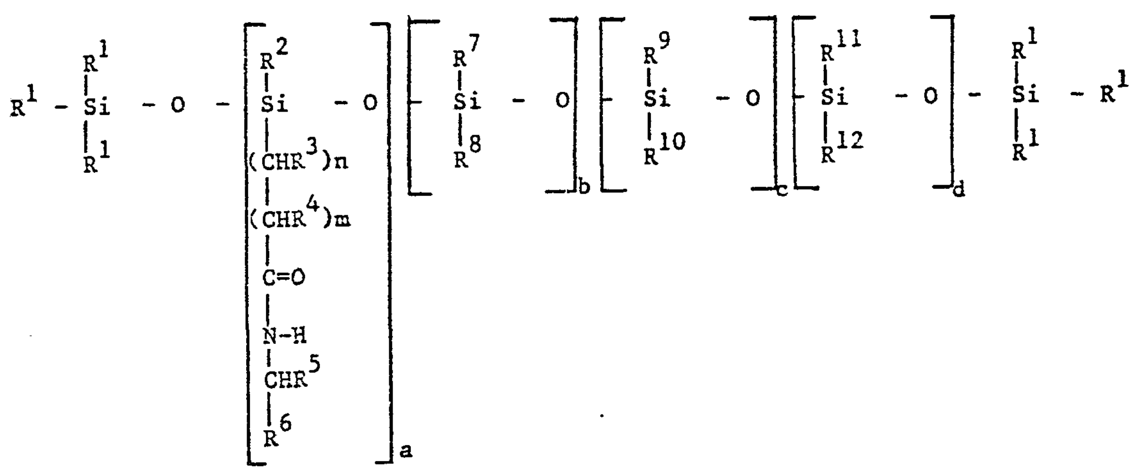

(I)

worin

$R^1$ und $R^2$ für Alkyl stehen,

$R^3$ und $R^4$ für H und Alkyl stehen,

$R^5$ die Bedeutungen Alkyl, Imidazolylmethyl, Indolylmethyl, Benzyl, Acylaminopropyl, Acylaminobutyl, besitzt, oder wenn $R^6$ für Aryl steht, die Bedeutung Alkyl besitzt,

$R^6$ für Alkylaminocarbonyl, Cycloalkylaminocarbonyl, Aralkylaminocarbonyl, Arylaminocarbonyl

oder Bicycloalkylaminocarbonyl, oder für Aryl, steht,

$R^7$, $R^8$, $R^9$, $R^{10}$ und $R^{11}$ für Alkyl oder Aryl stehen,

$R^{12}$ die Bedeutungen Alkylaminocarbonylalkyl, Cyanoalkyl, Carboxyalkyl, Alkoxycarbonylalkyl, Arylaminocarbonylalkyl, Halogenalkyl, Halogenaryl, Nitroaryl, Vinyl, besitzt,

m und n zwischen 0 und 12 variieren kann,

a zwischen 5 und 20 variieren kann,

d mindestens 1 bedeutet,

wobei a + b + c + d zwischen 30 und 100 variieren.

2. Chirale Polysiloxane der allgemeinen Formel I nach Anspruch 1, worin :

$R^1$ une $R^2$ jeweils Methyl bedeuten,

$R^3$ und $R^4$ für H, Methyl oder Äthyl stehen,

$R^5$ die Bedeutungen Methyl, i-Propyl, i-Butyl, 2-Butyl, Imidazolylmethyl, Indolylmethyl, Benzyl, Acylaminopropyl, Acylaminobutyl besitzt,

oder wenn $R^6$ für Phenyl oder Naphthyl steht, die Bedeutung Methyl besitzt,

$R^6$ die Bedeutungen n-Butylaminocarbonyl, i-Butylaminocarbonyl, tert.-Butylaminocarbonyl, Cyclohexylaminocarbonyl, Adamantylaminocarbonyl, Benzylaminocarbonyl, oder Phenyl oder Naphthyl besitzt,

$R^7$, $R^8$, $R^9$, $R^{10}$ und $R^{11}$ für $C_1$-$C_4$-Alkyl, insbesondere Methyl oder Phenyl stehen,

$R^{12}$ für n-Butylaminocarbonylpropyl, n-Propylaminocarbonylbutyl, Phenylaminocarbonyl, Trifluoropropyl, Cyanopropyl, Trichlorphenyl, Methoxycarbonylpropyl, Carboxypropyl steht, und worin a insbesondere für 8 steht.

3. Verfahren zur Herstellung der Verbindungen nach den Ansprüchen 1 und 2, dadurch gekennzeichnet, daß man eine Verbindung der allgemeinen Formel II :

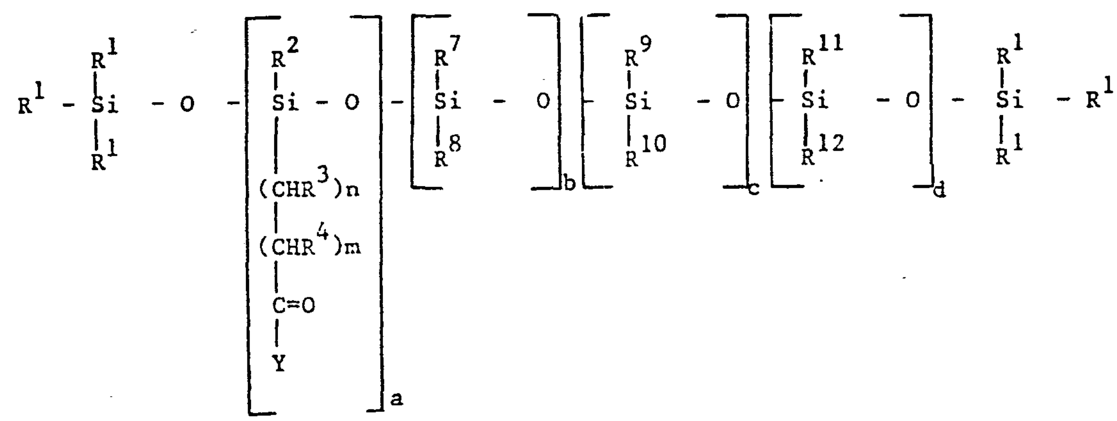

(II)

worin die Reste $R^1$, $R^2$, $R^3$, $R^4$, $R^7$, $R^8$, $R^9$, $R^{10}$, $R^{11}$ und $R^{12}$, sowie die Indices m, n, a, b, c und d die in den vorstehenden Ansprüchen angegebenen Bedeutungen besitzen und worin der Rest Y zusammen mit der C = O-Gruppe, an welche er gebunden ist, für eine Carboxylgruppe oder ein aktiviertes Derivat einer Carboxylgruppe steht und insbesondere die folgenden Bedeutungen besitzt :

$-N_3$, —OR, —OCOR, O-Nitrophenyl, —O-Trihalogenphenyl, —O-Pentahalogenphenyl,

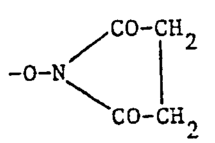

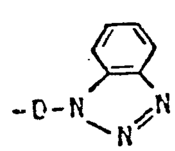

worin R für einen gegebenenfalls substituierten Alkylrest, Aralkylrest oder Arylrest steht, mit einem primären Amin der nachstehenden allgemeinen Formel III :

$$H_2N\text{—}CHR^5R^6 \qquad (III)$$

worin $R^5$ und $R^6$ die in en vorhergehenden Ansprüchen angegebenen Bedeutungen besitzen, gegebenenfalls in Gegenwart eines Kupplungsreagens, insbesondere in Gegenwart von Dicyclohexylcarbodiimid oder Carbonyldiimidazol, oder nach Umsetzung zum Säurechlorid, Säureanhydrid oder aktivierten Ester, umsetzt.

4. Verwendung der chiralen Polysiloxane der Formel I nach einem der Ansprüche 1 oder 2 zur Trennung optischer Antipoden.

5. Verwendung nach Anspruch 4 zur chromatographischen Trennung, insbesondere bei der Gaschromatographie in gepackten Säulen und Kapillaren.

6. Verwendung nach einem der Ansprüche 4 oder 5 zur analytischen oder präparativen Trennung optischer Antipoden.

7. Verwendung nach einem der Ansprüche 4 bis 6 zur quantitativen Bestimmung von α-Aminosäuren, Aminen, Aminoalkoholen und/oder Hydroxycarbonsäuren.

**Claims**

1. Chiral polysiloxanes of the following general formula I

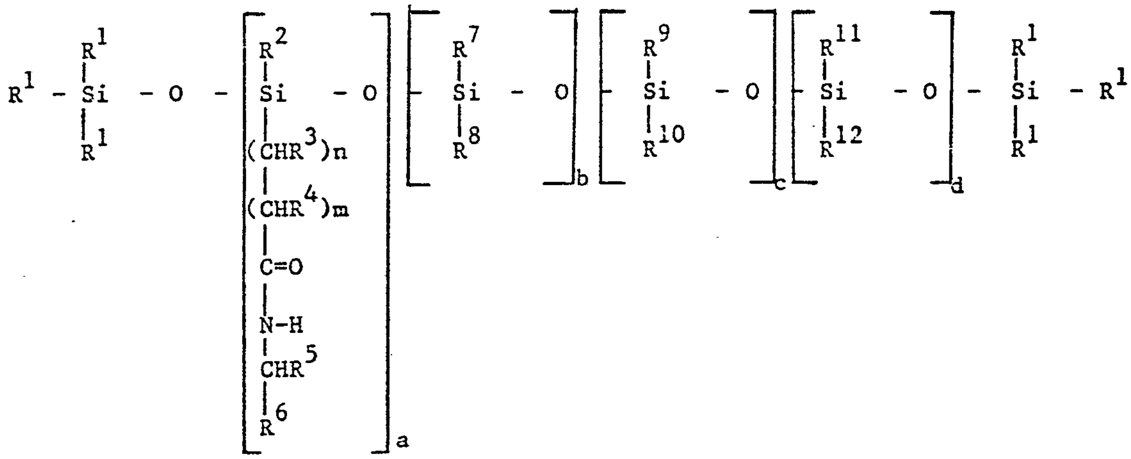

(I)

wherein

$R^1$ and $R^2$ are alkyl,

$R^3$ and $R^4$ represent H and alkyl,

$R^5$ represents alkyl, imidazolylmethyl, indolylmethyl, benzyl, acylaminopropyl, acylaminobutyl, or when $R^6$ is aryl, represents alkyl,

$R^6$ is alkylaminocarbonyl, cycloalkylaminocarbonyl, aralkylaminocarbonyl, arylaminocarbonyl or bicycloalkylaminocarbonyl or aryl,

$R^7$, $R^8$, $R^9$, $R^{10}$ and $R^{11}$ represent alkyl or aryl,

$R^{12}$ is alkylaminocarbonylalkyl, cyanoalkyl, carboxyalkyl, alkoxycarbonylalkyl, arylaminocarbonylalkyl, halogenalkyl, halogenaryl, nitroaryl, vinyl,

m and n vary between 0 and 12,

a may vary between 5 and 20,

d is at least 1, whereby $a + b + c + d$ varies between 30 and 100.

2. Chiral polysiloxanes of the general formula I according to claim 1 wherein

$R^1$ and $R^2$ are each methyl,

$R^3$ and $R^4$ represent H, methyl or ethyl,

$R^5$ represents methyl, i-propyl, i-butyl, 2-butyl, imidazolylmethyl, indolylmethyl, benzyl, acylaminopropyl, acylaminobutyl, or, when $R^6$ is phenyl or naphtyl, represents methyl,

$R^6$ represents n-butylaminocarbonyl, i-butylaminocarbonyl, tert.-butylaminocarbonyl, cyclohexylaminocarbonyl, adamantylaminocarbonyl, benzylaminocarbonyl or phenyl or naphthyl,

$R^7$, $R^8$, $R^9$, $R^{10}$ and $R^{11}$ represent $C_1$-$C_4$-alkyl and especially methyl or phenyl,

$R^{12}$ represents n-butylaminocarbonylpropyl, n-propylaminocarbonylbutyl, phenylaminocarbonyl, trifluoropropyl, cyanopropyl, trichlorophenyl, methoxycarbonylpropyl, carboxypropyl, and where in a is in particular 8.

3. A process for the preparation of the compounds according to claims 1 and 2 characterized in that one reacts a compound of the general formula II

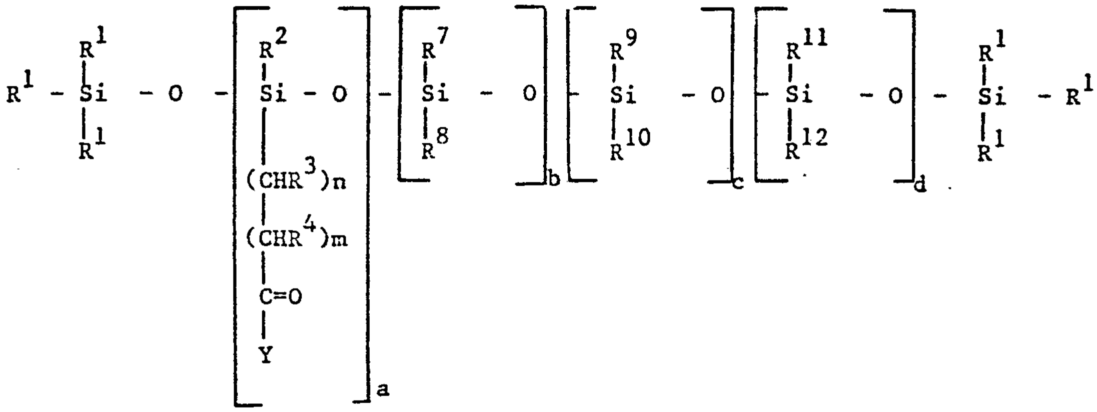

(II)

wherein the radicals $R^1$, $R^2$, $R^3$, $R^4$, $R^7$, $R^8$, $R^9$, $R^{10}$, $R^{11}$ and $R^{12}$ as well as the indices m, n, a, b, c, and d have the meanings given in the preceding claims and wherein the radical Y, together with the C = 0 group to which it is bonded, is a carboxyl group or an activated derivative of a carboxyl group and represents in particular :

$—N_2$, —OR, —OCOR, O-nitrophenyl, —O-trihalogenphenyl, —O-pentahalogenphenyl,

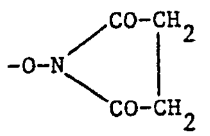

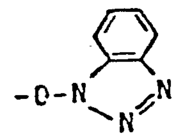

wherein R represents an optionally substituted alkyl radical, aralkyl radical or aryl radical, with a primary amine of the following general formula III

$$H_2N—CHR^5R^6 \qquad \text{(III)}$$

wherein $R^5$ and $R^6$ have the meanings given in the preceding claims, optionally in the presence of a coupling reagent, in particular in the presence of dicyclohexylcarbodiimide or carbonyldiimidazol, or after conversion to give the acid chloride, acid anhydride or activated ester.

4. Use of the chiral polysiloxanes of the formula I according to one of the claims 1 or 2 or separating optical antipodes.

5. Use according to claim 4 for chromatographical separation, in particular by the gas chromatography in packed columns and capillaries.

6. Use according to one of the claims 4 or 5 for analytical and preparative separation of optical antipodes.

7. Use according to one of the claims 4-6 for quantitative determination of α-amino acids, amines, amino alcohols and/or hydroxycarboxylic acids.

**Revendications**

1. Polysiloxanes chiraux de formule I :

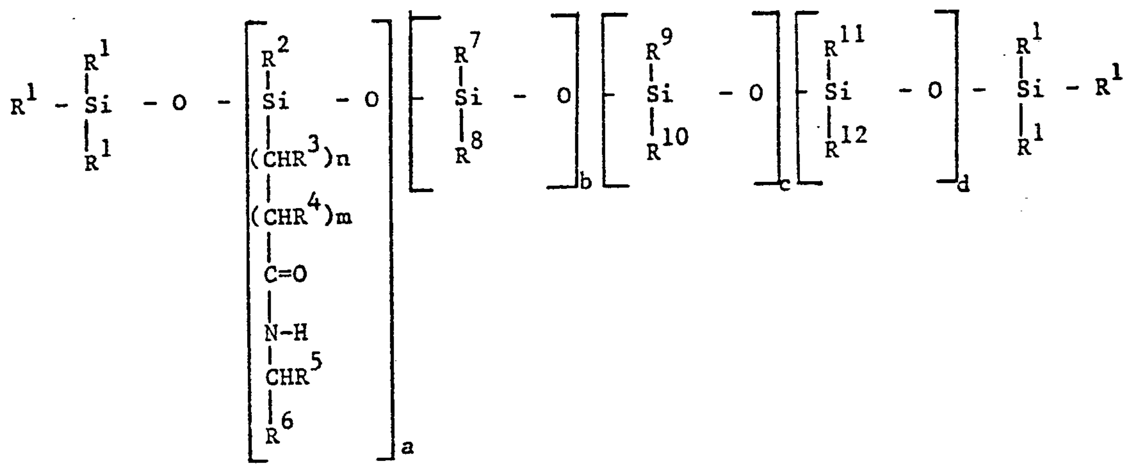

(I)

dans laquelle $R^1$ et $R^2$ représentent alkyle,

$R^3$ et $R^4$ représentent H, alkyle,

$R^5$ représente alkyle, imidazolylméthyle, indolylméthyle, benzyle, acylaminopropyle, acylaminobutyle, ou bien, lorsque $R^6$ représente aryle, $R^5$ représente alkyle,

$R^6$ représente alkylaminocarbonyle, cycloalkylaminocarbonyle, aralkylaminocarbonyle, arylaminocarbonyle, bicycloalkylaminocarbonyle, ou aryle,

$R^7$, $R^8$, $R^9$, $R^{10}$ et $R^{11}$ représentent alkyle ou aryle,

$R^{12}$ représente alkylaminocarbonylalkyle, cyanoalkyle, carboxyalkyle, alkoxycarbonylalkyle, arylaminocarbonylalkyle, halogénoalkyle, halogénoaryle, nitroaryle ou vinyle,

m et n peuvent varier entre 0 et 12,

a peut varier entre 5 et 20

d est au moins égal à 1, avec la condition que a + b + c + d varie entre 30 et 100.

2. Polysiloxanes chiraux de formule I tels que définis dans la revendication 1, dans laquelle :

$R^1$ et $R^2$ représentent chacun méthyle,

$R^3$ et $R^4$ représentent H, méthyle ou éthyle,

$R^5$ représente méthyle, i-propyle, i-butyle, 2-butyle, imidazolylméthyle, indolylméthyle, benzyle, acylaminopropyle, acylaminobutyle,

ou si $R^6$ représente phényle ou naphthyle, $R^5$ représente méthyle,

$R^6$ représente n-butylaminocarbonyle, i-butylaminocarbonyle, tert.-butylaminocarbonyle, cyclohexylaminocarbonyle, adamantylaminocarbonyle, benzylaminocarbonyle, phényle ou naphthyle,

$R^7$, $R^8$, $R^9$, $R^{10}$ et $R^{11}$ représentent un alkyle $C_1$-$C_4$, en particulier méthyle, ou un phényle,

$R^{12}$ représente n-butylaminocarbonylpropyle, n-propylaminocarbonylbutyle, phénylaminocarbonyle, trifluoropropyle, cyanopropyle, trichlorophényle, méthoxycarbonylpropyle, carboxypropyle, et a représente en particulier le nombre 8.

3. Procédé de préparation des composés selon l'une quelconque des revendications 1 et 2, caractérisé par le fait que l'on fait réagir un composé de formule II :

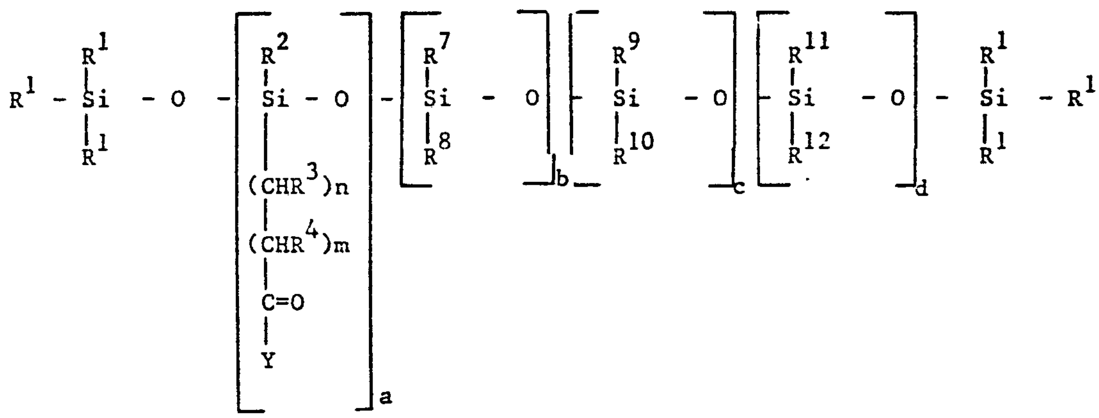

(II)

dans laquelle les restes $R^1$, $R^2$, $R^3$, $R^4$, $R^7$, $R^8$, $R^9$, $R^{10}$, $R^{11}$ et $R^{12}$ ainsi que les indices m, n, a, b, c et d ont les significations données précédemment et dans laquelle le reste Y, avec le groupement C = 0 auquel il est relié, représente un groupement carboxyle ou un dérivé activé d'un groupement carboxyle, et en particulier a les significations suivantes :

—$N_3$, —OR, —OCOR, O-nitrophényle, —O-trihalogénophényle, —O-pentahalogénophényle,

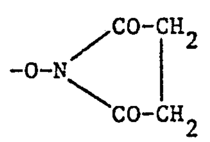

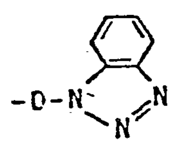

où R est un groupement alkyle, aralkyle ou aryle, éventuellement substitué, avec une amine primaire de formule générale III :

$$H_2N—CHR^5R^6 \qquad (III)$$

dans laquelle $R^5$ et $R^6$ ont les significations données dans les revendications précédentes, éventuellement en présence d'un réactif de couplage, en particulier en présence de dicyclohexylcarbodiimide ou de carbonyldiimidazole, ou après transformation en chlorure d'acide, anhydride d'acide ou ester activé correspondant.

4. Utilisation des polysiloxanes chiraux de formule I tels que définis dans l'une des revendications 1 et 2 dans la séparation d'antipodes optiques.

5. Utilisation selon la revendication 4, pour la séparation chromatographique en particulier par chromatographie en phase gazeuse en colonnes compactes et capillaires.

6. Utilisation selon l'une quelconque des revendications 4 et 5, pour la séparation analytique ou préparative d'antipodes optiques.

7. Utilisation selon l'une quelconque des revendications 4 à 6, pour le dosage quantitatif d'α-aminoacides, d'amines, d'aminoalcools, et/ou d'acides carboxyliques hydroxylés.

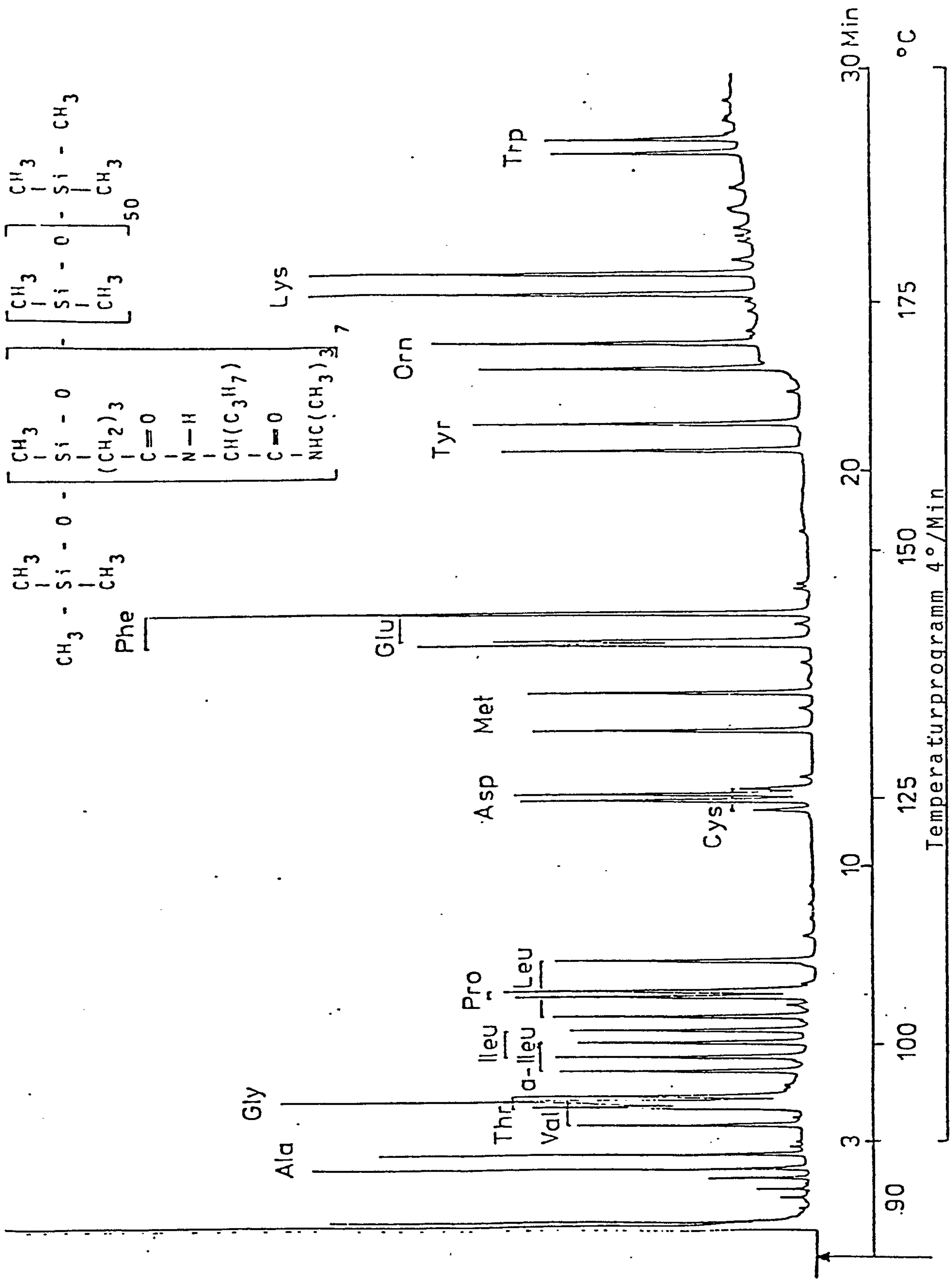
Ala
Gly
Thr
Val
a-Ileu
Ileu
Pro
Leu
Asp
Cys
Met
Glu
Phe
Tyr
Orn
Lys
Trp
90
3
100
10
125
150
20
175
30 Min
°C
Temperaturprogramm 4°/Min

Fig. 1a

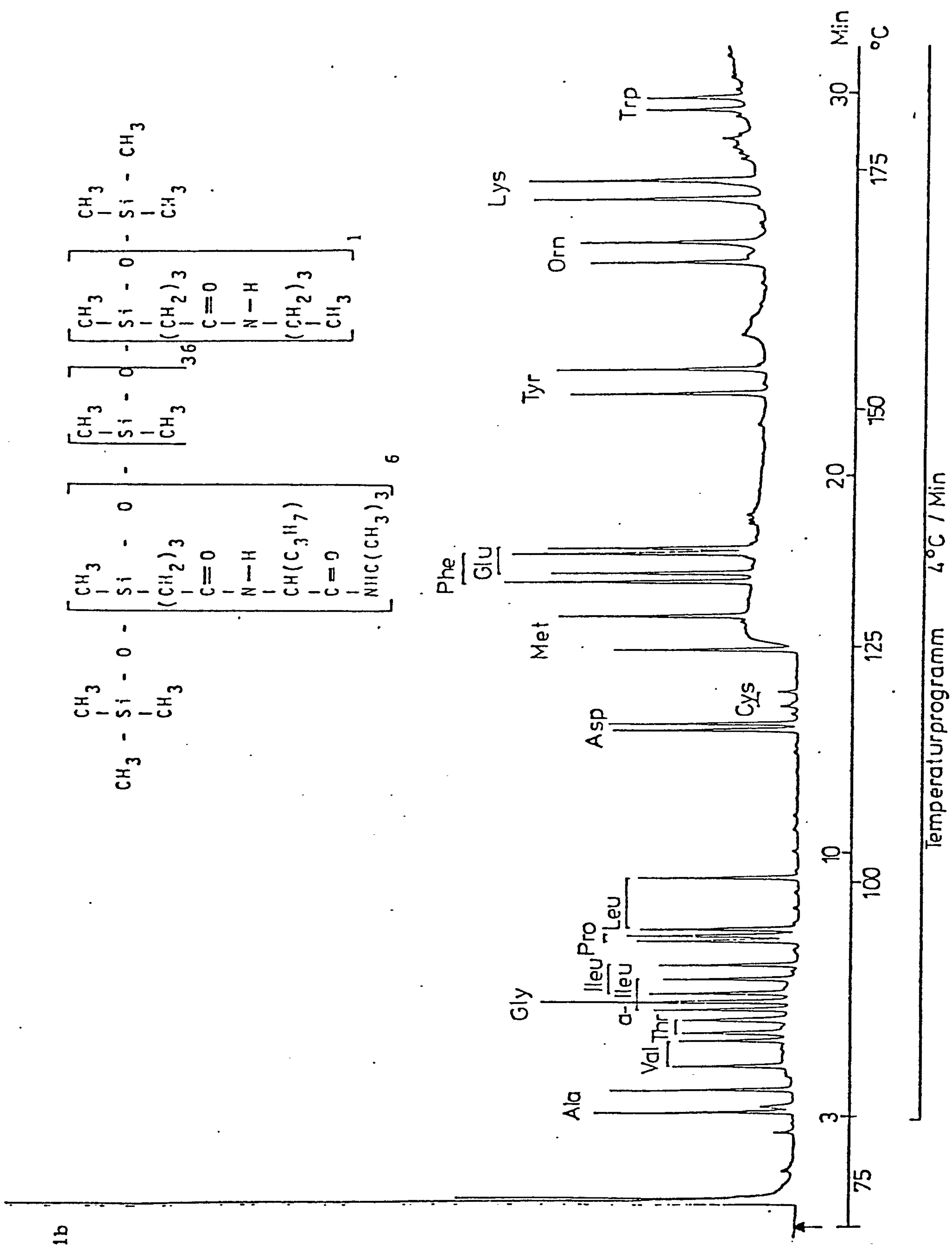
Ala
Val
Thr
Gly
a-Ileu
Ileu
Pro
Leu
Asp
Cys
Met
Phe
Glu
Tyr
Orn
Lys
Trp
Min
°C
3
10
20
30
75
100
125
150
175
Temperaturprogramm
4°C / Min

Fig. 1b

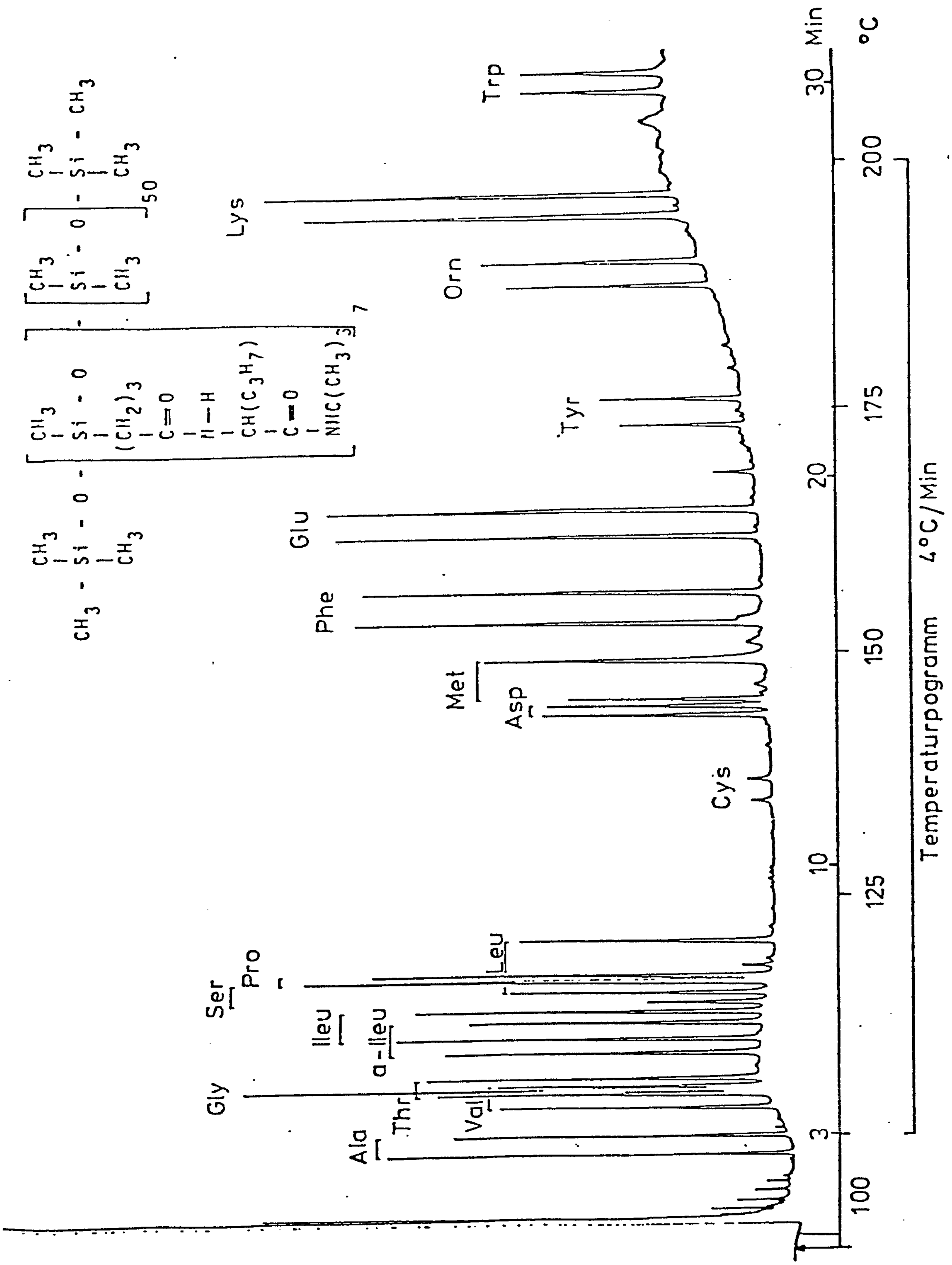
Ala
Thr
Val
Gly
a-Ileu
Ileu
Ser
Pro
Leu
Cys
Asp
Met
Phe
Glu
Tyr
Orn
Lys
Trp
3
10
20
30 Min
100
125
150
175
200 °C
Temperaturpogramm 4°C/Min

Fig. 2a

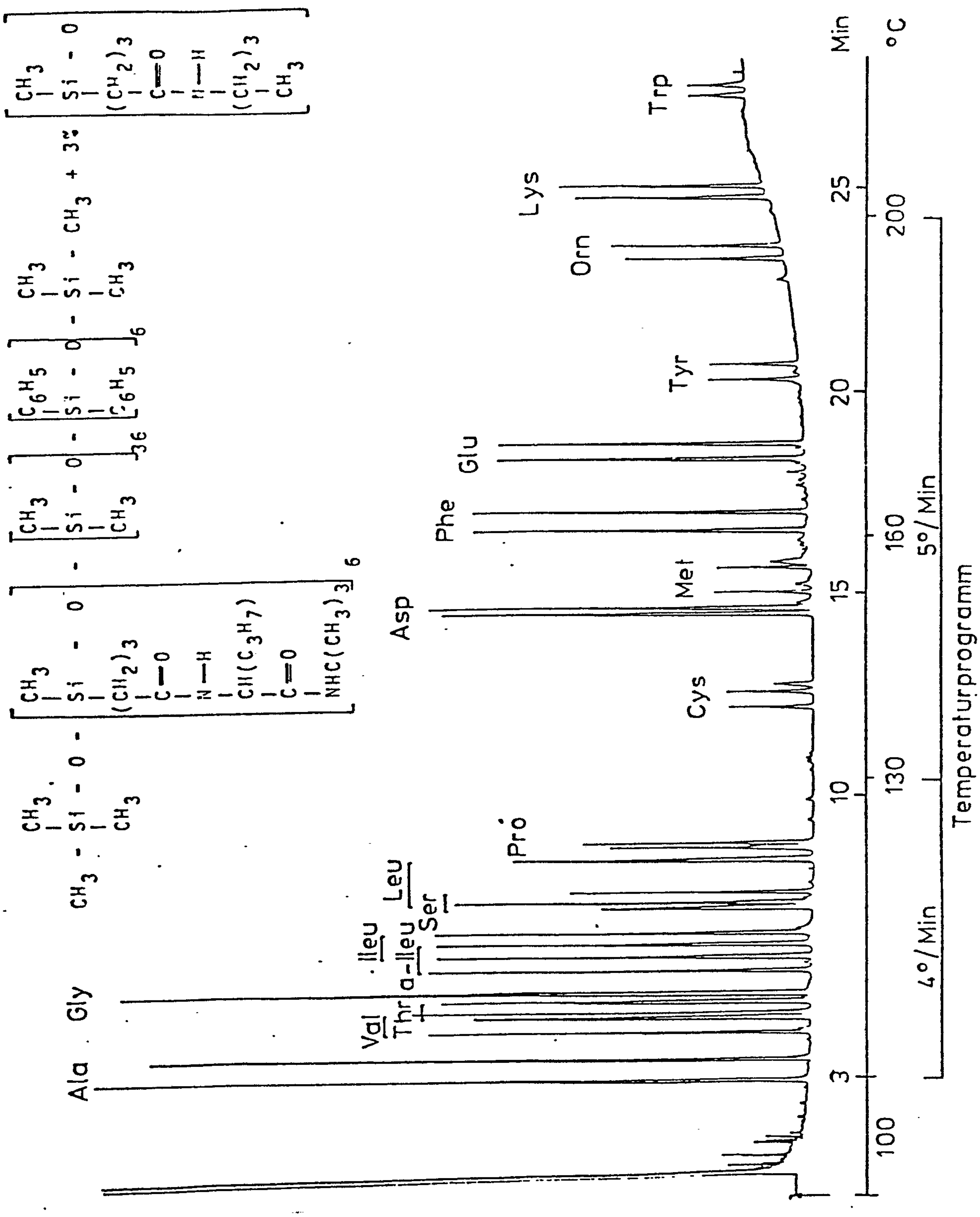

Ala
Gly
Val
Thr
Ileu
a-Ileu
Ser
Leu
Pro
Cys
Asp
Met
Phe
Glu
Tyr
Orn
Lys
Trp
3
10
15
20
25
Min
100
130
160
200
°C
4°/Min
5°/Min
Temperaturprogramm


Fig. 2b

Fig. 3

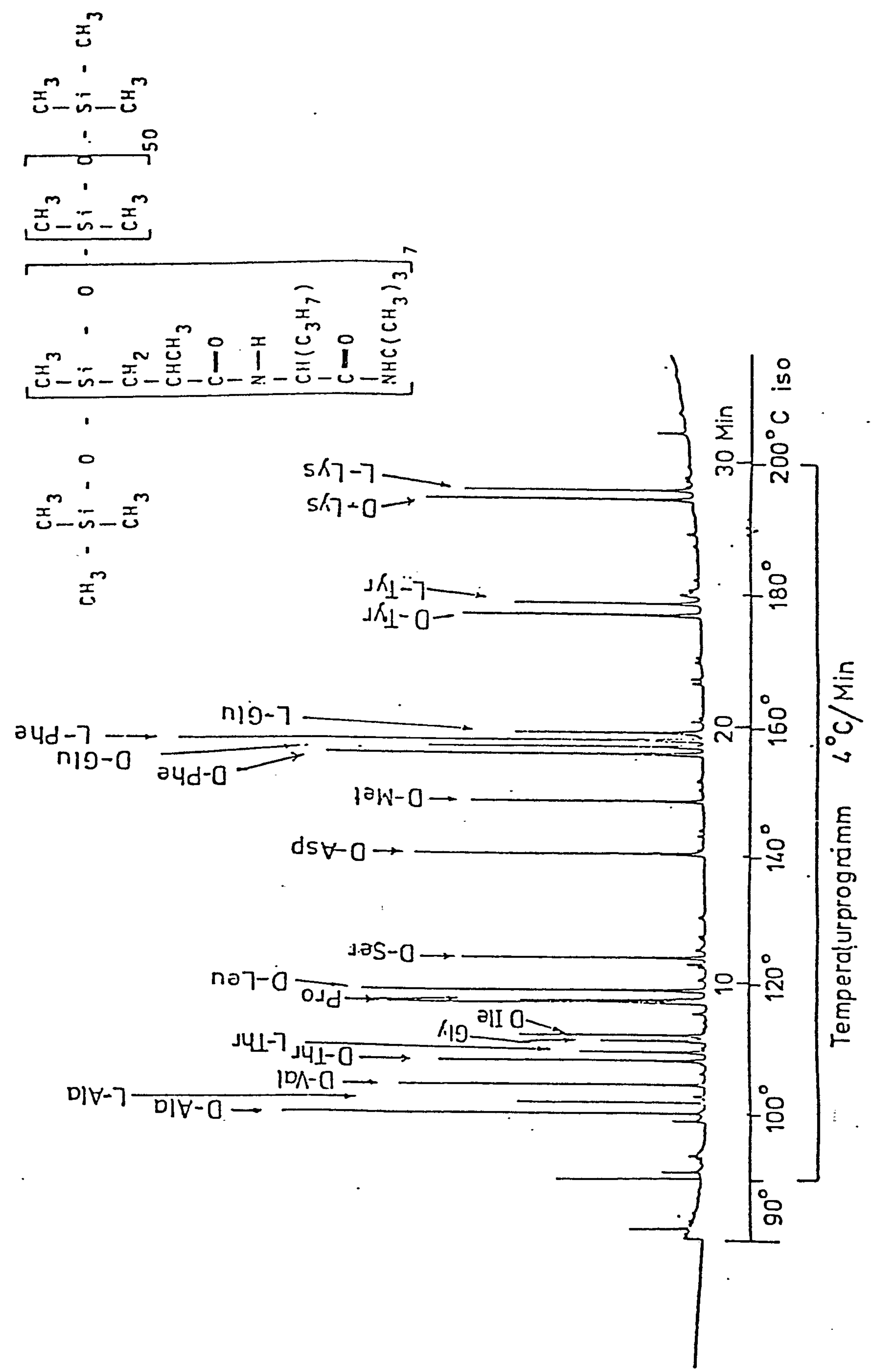

L-Ala
D-Ala
D-Val
D-Thr
L-Thr
Gly
D Ile
Pro
D-Leu
D-Ser
D-Asp
D-Met
D-Phe
D-Glu
L-Phe
L-Glu
D-Tyr
L-Tyr
D-Lys
L-Lys
10
20
30 Min
90°
100°
120°
140°
160°
180°
200°C iso
Temperaturprogramm 4°C/Min

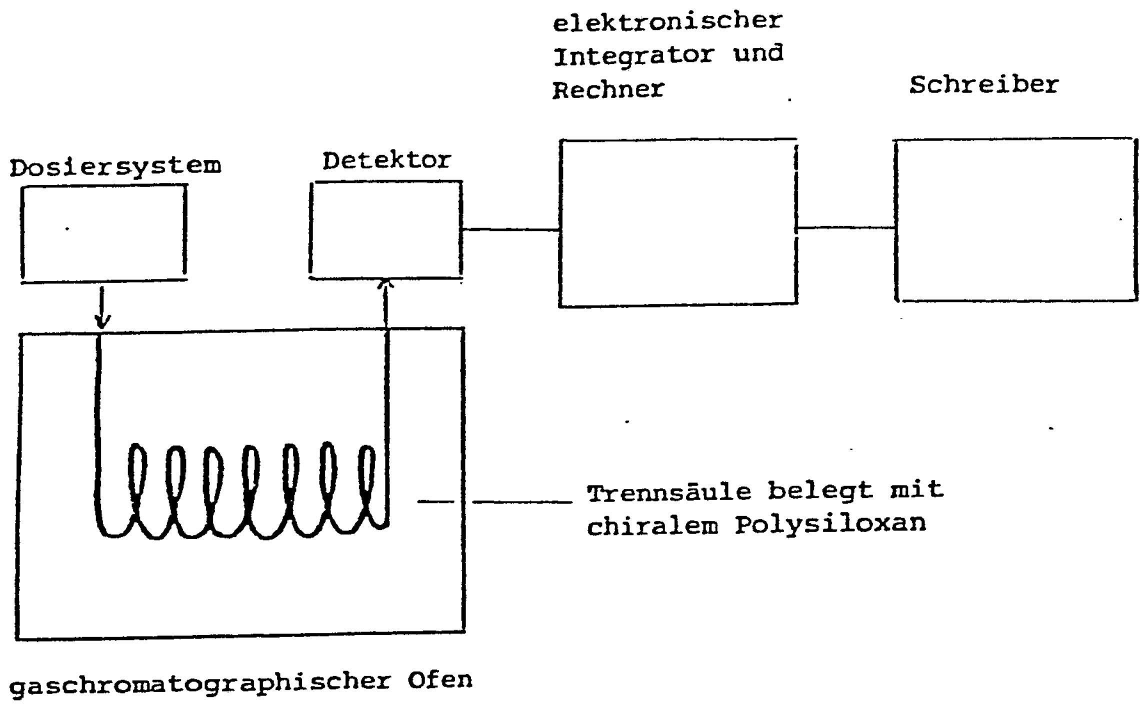
elektronischer
Integrator und
Rechner
Schreiber
Dosiersystem
Detektor
Trennsäule belegt mit
chiralem Polysiloxan
gaschromatographischer Ofen

FIGUR 4